# EUROPÄISCHE PATENTSCHRIFT

(11) **EP 2 260 906 B1**
(45) Veröffentlichungstag und Bekanntmachung des Hinweises auf die Patenterteilung: **01.05.2013**
(21) Anmeldenummer: 10005072.3
(22) Anmeldetag: 14.05.2010
(51) Int. Cl.: A62C 4/02, B01J 19/00

(54) **Flammensperranordnung**
Flame inhibitor assembly
Dispositif de protection contre les flammes

(30) Priorität: 09.06.2009 DE 102009024814
(43) Veröffentlichungstag der Anmeldung: 15.12.2010
(73) Patentinhaber: Leinemann GmbH & Co. KG, 38110 Braunschweig (DE)
(72) Erfinder: Helmsen, Frank, 31228 Peine (DE); Leinemann, Christoph, 38108 Braunschweig (DE)
(74) Vertreter: Lins, Edgar

(56) Entgegenhaltungen:
- WO-A1-94/00197
- AT-U1- 7 424
- US-A- 5 415 233

## Beschreibung

Die Erfindung betrifft eine Flammensperranordnung mit einem Gehäuse zur Halterung von wenigstens zwei Flammensperreinsätzen mit einer Vielzahl von für ein brennbares Gas dimensionierten axialen Durchtrittsspalten und mit einer zwischen zwei Flammensperreinsätzen angeordneten Zwischenlage, die eine radiale Verteilung der aus einem Flammensperreinsatz austretenden und in einen stromabwärts benachbarten Flammensperreinsatz eintretenden Gasströmung erlaubt.

Die Flammensperreinsätze dieser Flammensperranordnungen werden überwiegend im Wickelverfahren mit dünnen Edelstahlbändern hergestellt. Dabei wird ein glattes Metallband zusammen mit einem gleichmäßig gewellten Metallband gemeinsam aufgewickelt und beide bilden so Windungen einer vorzugsweise scheibenförmigen Anordnung. Die Durchtrittsspalte ergeben sich aus dem Anliegen des gewellten Metallbandes an den beiden benachbarten glatten Metallbändern, sodass definierte Durchtrittsspalte entstehen. Entsprechend der Entzündbarkeit des Gases dürfen die Durchtrittsspalte bei vorgegebener axialer Länge eine vorgegebene Spaltquerschnittsfläche nicht überschreiten. Um für leicht entzündbare Gase eine ausreichende Strömungsgeschwindigkeit zu gewährleisten, kann es daher erforderlich sein, die Flammensperreinsätze mit einer großen Querschnittsfläche aufzuwickeln, also mit einem großen Wickelradius herzustellen. Die Windungen sind dabei vorzugsweise spiralförmig aufeinander liegend angeordnet, können aber auch als kreisförmige geschlossene Windungen aus je einem glatten Metallband und einem gewellten Metallband bestehen.

Es hat sich gezeigt, dass es sinnvoll ist, die für die Abkühlung des Gases bei einem vorgegebenen maximalen Querschnitt der Durchtrittsspalte erforderliche Spaltlänge nicht mit einem einzigen Flammensperreinsatz zu realisieren, sondern mehrere, also wenigstens zwei Flammensperreinsätze vorzusehen, wobei es vorteilhaft ist, zwischen den Flammensperreinsätzen eine Zwischenlage anzuordnen, die eine radiale Verteilung der aus dem einen Flammensperreinsatz austretenden und in den stromabwärts benachbarten Flammensperreinsatz eintretenden Gasströmung ermöglicht.

Werden die Flammensperreinsätze hingegen direkt ohne Zwischenlage aufeinander gelegt, fluchten die Durchtrittsspalte nicht formgenau miteinander, sodass die aufeinander liegenden Flammensperreinsätze resultierende Kanäle bilden, deren effektive Durchtrittsspalte gegenüber den Durchtrittsspalten eines Flammensperreinsatzes in undefinierter Weise verkleinert sind, weil die freie Querschnittsfläche des Pakets der aufeinander liegenden Flammensperreinsätze verringert wird. Dadurch wird der Druckverlust bei der Durchströmung stark erhöht. Die bei den gattungsgemäßen Flammensperranordnung vorgesehenen Zwischenlagen dienen somit als Abstandselemente, die eine Verringerung der freien Querschnittsfläche der hintereinander liegenden Flammensperreinsätze verhindern. In einer üblichen Bauweise bildet das Gehäuse der Flammensperranordnung einen Umfassungskäfig mit einer geschlossenen Mantelwandung. Da sich das Gas zwischen den Flammensperreinsätzen in radialer Richtung ausdehnen kann, muss dafür gesorgt werden, dass die zwischen dem Rand der Flammensperreinsätze und der Innenwandung des Umfassungskäfigs entstehenden Spalte kleiner als die Spalte in den Flammensperreinsätzen selbst sind. Anderenfalls bestünde ein Umgehungsweg um den Flammensperreinsatz, auf dem das Gas nicht in der durch den jeweiligen Flammensperreinsatz vorgesehenen Weise abgekühlt wird, sodass es ggf. zu einem Flammendurchschlag durch die Flammensperranordnung kommt, wodurch eine Katastrophe ausgelöst werden kann, wenn sich beispielsweise eine Explosion in einen Gasvorratstank fortsetzt, der durch die Flammensperranordnung geschützt werden sollte.

Insbesondere bei der Herstellung großer Flammensperreinsätze, die bis zu 2 m Durchmesser haben können, ist es fertigungstechnisch problematisch, das Auftreten von größeren Spalten zwischen dem Flammensperreinsatz und dem umgebenen Gehäuse zu vermeiden. Derart große Flammensperreinsätze können regelmäßig nicht exakt rund hergestellt werden. Es ist daher bekannt, einen derartigen Flammensperreinsatz unmittelbar in den Umfassungskäfig hineinzuwickeln und an den Stellen, an denen sich größere Spalte bilden, glattes Filterband nachzustopfen, um so einen sicheren Randkontakt zwischen dem Flammensperreinsatz und dem Umfassungskäfig herzustellen. Dies hat jedoch den Nachteil, dass der Flammensperreinsatz so fest in den Umfassungskäfig eingepasst wird, dass er für Reinigungs- und Erneuerungszwecke praktisch nicht entnommen werden kann, insbesondere wenn große Verunreinigungen oder sogar Korrosionen zwischen dem Filter und dem Umfassungskäfig auftreten.

Eine Flammensperranordnung der beschriebenen Art ist aus der WO 94/00197 A1 bekannt. Sie besteht aus mehreren Flammensperreinsätzen, zwischen denen eine Zwischenlage aus flügelartigen Umlenkelementen eingesetzt ist. Die gesamte Anordnung ist in ein rohrförmiges Gehäuse eingesetzt. Da die Flammensperreinsätze in diesem Fall durch kreisförmig geschlossene Windungen aus je einem glatten Metallband und einem gewellten Metallband gebildet werden, ist auch für diese Konstruktion wesentlich, dass sie Spalte zwischen den Flammensperreinsatz und dem Gehäuse so klein sind, dass durch sie kein nennenswerter Gasfluss um die Flammensperreinsätze herum stattfinden kann. Demgemäß muss auch hier der Flammensperreinsatz so fest in den Umfassungskäfig eingepasst werden, dass er für Reinigungs- und Erneuerungszwecke praktisch nicht entnommen werden kann.

Ein gleiches Problem besteht bei einer Detonationssicherung, wie sie durch die AT 7 424 U1 bekannt ist. Dort ist jeweils ein Flammensperrpaar zu einem Flammensperreinsatz zusammengefasst und in einen Umreifungsrohr eingesetzt. Das Umreifungsrohr bewirkt dabei eine Abdichtung zu einer Umfassungswand eines Gehäuses. Demzufolge müssen die Flammensperreinsätze abgedichtet am Umreifungsrohr sitzen und das Umreifungsrohr muss abdichtend in das Gehäuse eingepresst sein. Auch hier ist ein einfaches Entnehmen eines derartigen Flammensperreinsatzes nicht möglich.

Um einen Flammensperreinsatz zu Servicezwecken einfach ausbauen zu können, ist ein möglichst großer Spalt zwischen dem Flammensperreinsatz und dem Umfassungskäfig sinnvoll. Dabei muss allerdings verhindert werden, dass die Flamme der Gasströmung einen oder mehrere Flammensperreinsätze über den radial äußeren Spalt umströmt und so die Flammensperre nutzlos macht.

Wenn maximal zwei Flammensperreinsätze verwendet werden, können radial äußere Stützringe direkt axial außen auf den Flammensperreinsätzen aufliegen, sodass eine radial äußere Umströmung durch das durch die Flammensperranordnung laufende Gas nicht möglich ist. Bei mehr als zwei Flammensperreinsätzen ist es bekannt, einen Umfassungskäfig mit abgestuften Wänden zu verwenden, bei dem jeder Flammensperreinsatz dichtend auf dem Metall des Umfassungskäfigs aufliegt. Die Herstellung eines solchen Umfassungskäfigs ist sehr teuer und kann nicht in Serie erfolgen, da je nach Anzahl der Flammensperrelemente unterschiedliche Modelle und Durchmesser notwendig sind. Ferner müssen zur Anpassung unterschiedliche Gase die Flammensperreinsätze in unterschiedlicher Größe hergestellt werden.

Der Erfindung liegt daher die Aufgabe zugrunde, eine Flammensperranordnung der eingangs erwähnten Art so auszubilden, dass die Montage und Demontage der Flammensperreinsätze, insbesondere bei der Verwendung von drei oder mehr Flammensperreinsätzen erleichtert und eine unbeabsichtigte Umströmung der Flammensperreinsätze sicher vermieden wird.

Zur Lösung dieser Aufgabe ist eine Flammensperranordnung der eingangs erwähnten Art dadurch gekennzeichnet, dass radial außen von den Flammensperreinsätzen ein den Ausbau des Flommensperreinsatzes erleichternder Raum vorgesehen ist und wenigstens eine separate geschlossene Dichtung zwischen einem Flammensperreinsatz und dem Gehäuse oder zwischen zwei Flammensperreinsätzen so angeordnet ist, dass eine Umströmung des Flammensperreinsatzes in dem radiale außen von den Durchtrittsspalten befindlichen Raum verhindert wird.

Die erfindungsgemäße Flammensperranordnung kann somit einem beliebig großen Raum radial außen von den Durchtrittsspalten der Flammensperreinsätze aufweisen, sodass eine einfache Montage und Demontage der Flammensperrelnsätze möglich ist.

In der Alternative, In der sich die geschlossene Dichtung zwischen dem Gehäuse und einem Flammensperreinsatz befindet, kann der Zwischenraum zwischen dem Gehäuse und dem Flammensperreinsatz für eine axiale Durchströmung durch die Dichtung verschlossen werden. In einer anderen, bevorzugten Ausführungsform der Erfindung ist es jedoch auch möglich, die radial außen von den Flammensperreinsätzen vorgesehenen Dichtungen axial lückenlos aneinander anschließend auszubilden, sodass sie zwischen axial verspannten Gehäusetellen angeklemmt werden und somit eine radiale. Dichtung gegen das Ausströmen des Gases aus den Zwischenlagen bewirken. In diesem Fall ist es vorteilhaft, wenn die Dichtungen durch spiralförmig aufeinander gewickelte Windungen aus einem glatten Metallband gebildet sind, sodass die Aufbringung der Dichtung nach der Herstellung des Flammensperreinsatzes, vorzugsweise in der Wickeltechnik, erfolgen kann. Dabei kann das für die Herstellung der Dichtung verwendete glatte Metallband die Breite des Metallbandes des Flammensperreinsatzes aufweisen oder eine größere Breite (axiale Länge bezüglich der Flammensperranordnung) aufweisen, die der gemeinsamen axialen Länge von Flammensperreinsatz und Zwischenlage entspricht. Wenn die Breite des Metallbandes für die gewickelte Dichtung gleich der Breite der Metallbänder für die Herstellung des Flammensperreinsatzes ist, wird zweckmäßigerweise zwischen die gewickelten Dichtungen ein Zwischenring in der Zwischenlage eingelegt, sodass in axialer Richtung die gewickelten Dichtungen und die Zwischenringe eine Länge bilden, die der Länge der Flammensperreinsätze mit ihren Zwischenlagen entspricht.

In einer alternativen Ausführungsform kann zwischen den radialen Rändern der Flammensperreinsätze eine geschlossene Dichtung angeordnet sein, sodass eine Abdichtung nach radial außen zwischen den Flammensperreinsätzen erfolgt. Vorzugsweise ist dabei die Zwischenlage um die radiale Breite der geschlossenen Dichtung kleiner ausgebildet, sodass die Zwischenlage zwischen die Flammensperreinsätze und dem dazwischen befindlichen geschlossenen Dichtungsring einlegbar ist.

Eine vorteilhafte Ausbildung der erfindungsgemäßen Flammensperranordnung wird mit Flammensperreinsätzen erzielt, die radial außen von den Durchtrittsspalten mit einem umlaufenden massiven Rand versehen sind, wobei die Ränder als Stapel zwischen den axial gegeneinander verspannten Gehäuseteilen verspannt sind. Die Abdichtung nach radial außen erfolgt somit durch die aneinander liegenden und gegeneinander verspannten massiven Ränder der Flammensperreinsätze. Zwischen den Rändern können auch Ringdichtungen eingelegt sein, die dann eine axiale Verspannung der Ränder der Flammensperreinsätze unnötig machen können.

Wenn die Flammensperreinsätze mit entsprechenden massiven Rändern versehen sind, erübrigt sich das Vorsehen eines mantelförmigen Umfassungsgehäuses, sodass die Flammensperreinsätze in diesem Fall nicht mehr durch ein zusätzliches Mantelgehäuse umgeben sein müssen. Dadurch können die Flammensperreinsätze zu Servicezwecken leicht entnommen werden, nachdem lediglich ggf. Spannschrauben für die axiale Verspannung von Gehäuseteile gelockert bzw. entfernt worden sind.

In anderen Ausführungsformen kann die Zwischenlage beispielsweise durch ein Drahtgitter gebildet sein, das lediglich als Abstandshalter zwischen den Flammensperreinsätzen dient. Zur Erleichterung der Montage können die Zwischenlagen durch Punktschweißen, Verlöten u. ä. mit einem zugehörigen Flammensperreinsatz verbunden sein. Ebenso ist es zur Erleichterung der Montage möglich, bei der Verwendung von Zwischenringen zwischen den radial außen aufgebrachten, vorzugsweise gewickelten Dichtungen der Flammensperreinsätze eine entsprechende Verbindung zwischen der Zwischenlage und dem zugehörigen Zwischenring vorzusehen, sodass eine einheitliche Handhabung von Zwischenlage und Zwischenring möglich ist. Selbstverständlich ist es dabei auch möglich, den Zwischenring durch Verschweißen, Verlöten u. ä. mit der benachbarten Dichtung des Flammensperreinsatzes zu verbinden.

Die vorliegende Erfindung wird bevorzugt mit gewickelten Flammensperreinsätzen realisiert. Sie ist selbstverständlich aber auch mit allen anderen üblichen Flammensperreinsätzen durchführbar, beispielsweise mit Flammensperreinsätzen aus Sintermetall, Metallschäumen, Drahtgewebegittern, Streckmetallgittern, porösen Keramiken, gebohrten Platten aus Metall oder Kunststoff (insbesondere PTFE) o. dgl..

Die Erfindung soll im Folgenden anhand von in der Zeichnung dargestellten Ausführungsbeispielen näher erläutert werden. Es zeigen:
- Figur 1 -: einen Teilschnitt durch eine Flammensperranordnung mit vier Flammensperreinsätzen und vier zugehörigen radialen geschlos- senen Dichtungen
- Figur 2 -: eine Anordnung analog Figur 1, bei der die radial geschlossenen Dichtungen mit Dichtungs-Zwischenringen kombiniert sind
- Figur 2a und 2b -: Details der Befestigung der Zwischenlagen an den Dichtungs- Zwischenringen
- Figur 3 -: eine schematische Darstellung für eine Flammensperranordnung mit einer am Rand der Flammensperreinsätze umlaufenden axialen Dichtung
- Figur 4 -: eine Draufsicht auf eine Zwischenlage in Form eines Drahtsiebes
- Figur 5 -: eine schematische Darstellung einer Flammensperranordnung mit drei radial äußeren umlaufenden Dichtungen, die einen axialen Strömungsweg durch einen radial äußeren Spalt verschließen
- Figur 6 -: eine Anordnung gemäß Figur 5 mit einer einzigen radialen Dich- tung an dem mittleren Flammensperreinsatz
- Figur 7 -: eine Anordnung gemäß Figur 5 mit einer anderen Ausführungsform der radialen Dichtung
- Figur 8 -: eine Anordnung gemäß Figur 6 mit einer anderen Ausführungsform der radialen Dichtung
- Figur 9 -: eine Anordnung, ähnlich der Figur 1, mit einer Abzieheinrichtung für ein Gehäuseteil in Form eines Radialrippenrings
- Figur 10 -: eine schematische Darstellung einer Anordnung von sieben Flam- mensperreinsätzen, die einen umlaufenden massiven Rand auf- weisen
- Figur 11 -: Varianten der Anordnung gemäß der Figur 10
- Figur 12 -: einen verschweißten Gehäusekäfig mit einer Anordnung jeweils einer radialen Dichtung für zwei Flammensperreinsätze und eine Modifikation der Anordnung mit jeweils einer radialen Dichtung für einen Flammensperreinsatz.

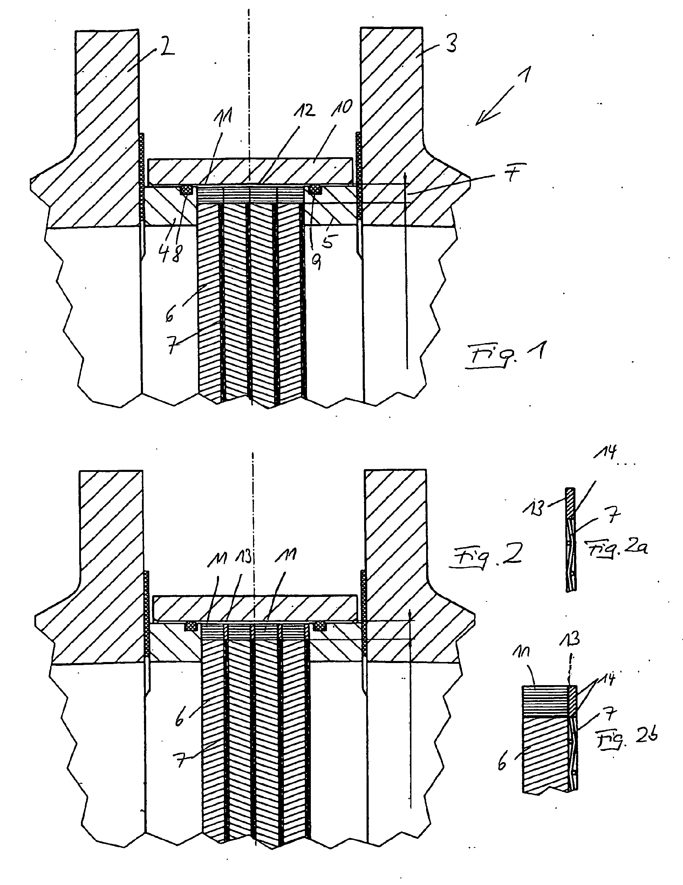

Figur 1 lässt ein Gehäuse 1 mit zwei flanschartigen Gehäuseteilen 2, 3 erkennen, die über (nicht dargestellte) Spannschrauben axial miteinander verspannt werden können. Die flanschartigen Gehäuseteile 2, 3 wirken auf mit ihnen verbundene Gehäuseringe 4, 5 ein, zwischen denen axial vier Flammensperreinsätze 6 mit jeweils einer Zwischenlage 7 eingesetzt sind. Die Gehäuseringe 4, 5 weisen an ihrer nach radial außen zeigenden Mantelfläche umlaufende Nuten 8 auf, in die Dichtringe 9 in Form von O-Ringen eingelegt sind. Über die Gehäuseringe 4, 5 ist eine zylindrische Mantelwandung 10 geschoben, die mit den Dichtringen 9 den Raum für die Flammensperreinsätze 6 abdichtet. Die Flammensperreinsätze enden radial mit Abstand von der zylindrischen Mantelwandung 10 und sind auf ihrer Außenseite mit geschlossenen Dichtungen 11 versehen, deren axiale Länge der Summe der axialen Längen von Flammensperreinsatz mit zugehöriger Zwischenlage 7 entspricht. Über die Gehäuseteile 2, 3 und die Gehäuseringe 4, 5 wird der Spanndruck für die axiale Verspannung auf die aneinander anliegenden Dichtungen 11 ausgeübt, die somit über ihre axialen Längen aneinander gepresst werden und so für die Zwischenlagen 7 eine radiale Abdichtung bilden. Die Dichtungen 11 sind vorzugsweise durch spiralförmige Windungen eines Metallbandes in der Breite der axialen Länge der Dichtung 11 gebildet. Das gewickelte Windungspaket für die Dichtung 11 wird so groß gewählt, dass die Überdeckungsfläche F, also die radiale Stärke der Dichtung 11, so groß ist, dass die Dichtungen 11 den Spanndruck aufnehmen können.

Es ist in Figur 1 erkennbar, dass radial außen von den Dichtungen 11 ein radial äußerer Spalt 12 zu der zylindrischen Mantelwandung bestehen kann, da die Abdichtung in radialer Richtung über die axiale Länge des Paketes der Flammensperreinsätze 6 mit den Zwischenlagen 7 zuverlässig erfolgt.

Bei der in Figur 2 dargestellten Ausführungsform weisen die Dichtungen 11 eine axiale Länge auf, die der axialen Länge der Flammensperreinsätze 6 entspricht. Für die axiale Länge der Zwischenlagen 7 sind zwischen die Dichtungen 11 Dichtungs-Zwischenringe 13 eingelegt, die dafür sorgen, dass der Stapel aus Dichtungen 11 und Dichtungs-Zwischenringen 13 die axiale Länge aufweist, die auf die Flammensperreinsätze 6 mit den Zwischenlagen 7 aufweisen.

Figur 2a verdeutlicht, dass zwischen dem Dichtungs-Zwischenring 13 und der als Drahtgitter ausgebildeten Zwischenlage 7 eine Schweißverbindung 14 vorgesehen ist, sodass die Zwischenlage 7 mit dem Dichtungs-Zwischenring 13 einheitlich handhabbar ist.

Bei der Variante gemäß Figur 2b befinden sich Schweißverbindungen 14 sowohl zwischen der Zwischenlage 7 und dem Dichtungs-Zwischenring 13 als auch zwischen der Dichtung 11 und dem Dichtungs-Zwischenring 13, sodass der Flammensperreinsatz 6 mit der an ihr durch Schweiß- oder Lötpunkte verbundenen Zwischenlage 7, der Dichtung 11 und dem Dichtungs-Zwischenring 13 ein einheitlich handbarbares Bauteil bilden.

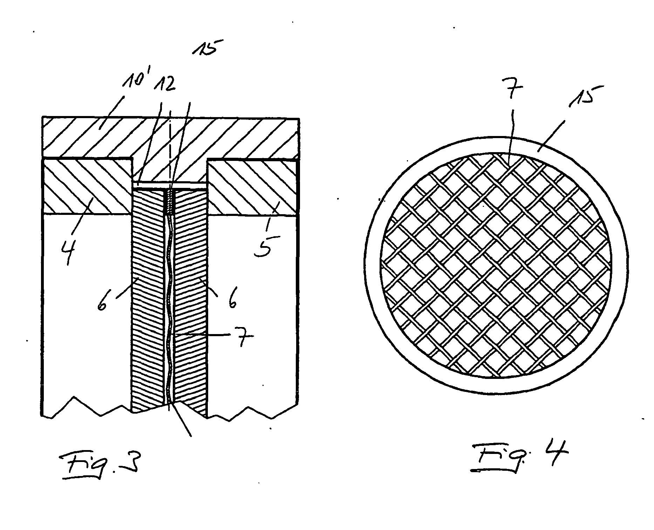

Bei der Variante gemäß Figur 3 sind zwischen den Gehäuseringen 4, 5 zwei Flammensperreinsätze 6 mit einer schematisch angedeuteten Zwischenlage 7 eingespannt, wobei die Zwischenlage 7 eine radiale Ausdehnung hat, die etwas kleiner ist als die radiale Ausdehnung der Flammensperreinsätze 6. In dem verbleibenden radialen Randbereich der Flammensperreinsätze befindet sich ein Dichtring 15 als metallische Flachdichtung. Durch den von dem Gehäuseringen 4, 5 ausgeübten Druck werden die Flammensperreinsätze 6 und der Dichtring 15 abdichtend gegeneinander gepresst, sodass aus der Zwischenlage 7 kein Gas nach radial außen in den auch hier vorgesehenen radialen Spalt 12 austreten kann.

Figur 4 zeigt in einer Ansicht die Ausbildung der Zwischenlage 7, die in Form eines Drahtgitters hier einheitlich mit dem Dichtring 15, beispielsweise durch Schweißen, verbunden ist.

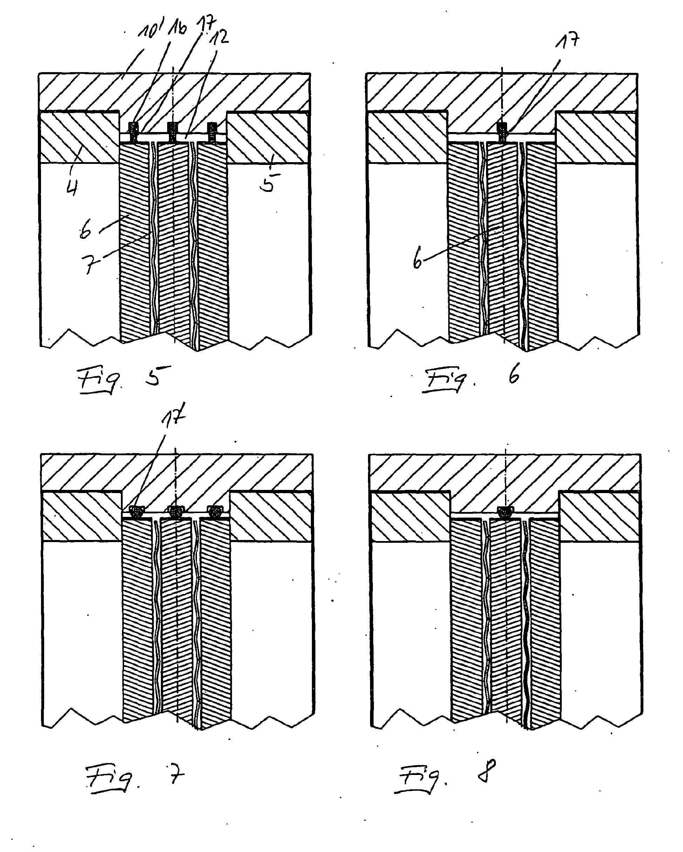

Bei der in Figur 5 dargestellten Ausführungsform sind zwischen den Gehäuseringen 4, 5 drei Flammensperreinsätze 6 mit zwei dazwischen befindlichen Zwischenlagen 7 angeordnet und axial verspannt. Die zylindrische Mantelwandung 10 weist hier an ihrer Innenseite drei umlaufende Nuten 16 auf, in die Dichtringe 17 eingesetzt sind, die den radial äußeren Spalt 12 in axialer Richtung für eine Durchströmung verschließen. Demgemäß kann zwar aus der Zwischenlage Gas in den radial äußeren Spalt eintreten, jedoch nicht einen der Flammensperreinsätze 6 außen umströmen, da der axiale Durchgang durch die Dichtringe 17 versperrt ist.

Figur 6 zeigt eine ähnliche Anordnung, bei der lediglich der mittlere Flammensperreinsatz 6 mit einem Dichtring 17 nach radial außen abgeschlossen ist. Dies ist ausreichend, wenn die Anlage der Gehäuseringe 4, 5 an die radialen Ränder der äußeren Flammensperreinsätze 6 abdichtend ausgeführt ist, sodass bereits durch die Verspannung der äußeren Flammensperreinsätze 6 eine Umströmung der äußeren Flammensperreinsätze 6 nicht möglich ist. Der Dichtring 17 dient daher der Verhinderung der Umströmung des mittleren Flammensperreinsatzes 6.

Figur 7 zeigt eine der Figur 5 ähnliche Anordnung, bei der Dichtringe 17' nicht als flache Dichtringe, sondern als Dichtringe mit einem kreisrunden Querschnitt nach Art eines O-Rings ausgeführt sind. Eine entsprechende Modifikation der Ausführungsform gemäß Figur 6 findet sich in Figur 8. In manchen Fällen wird es möglich sein, die Dichtringe 17, 17' aus thermisch stabilem Kunststoff oder Elastomer auszubilden. Bevorzugt ist jedoch die Ausbildung der Dichtringe 17, 17' aus einem Weichmetall, beispielsweise Weichkupfer.

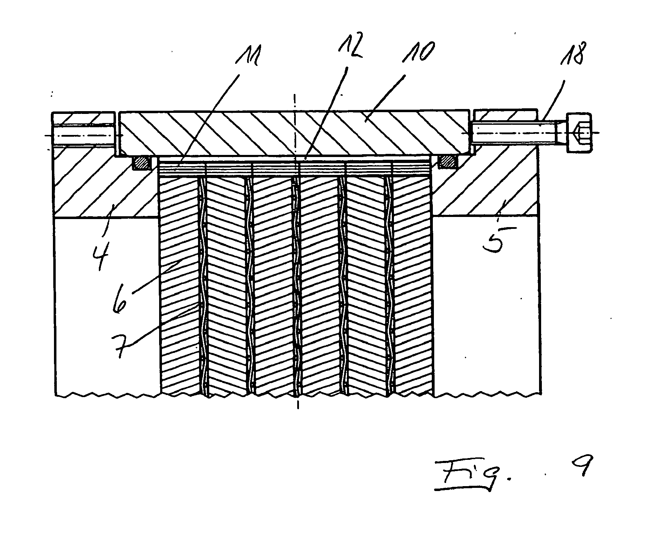

Die in Figur 9 dargestellte Ausführungsform einer Flammensperranordnung sieht vor, dass in den Gehäusering 5 eine Bolzenschraube 18 eingeschraubt ist, die sich mit ihrem stumpfen Ende an einer Stirnseite der zylindrischen Mantelwandung 10 abstützt. Vorzugsweise weist der Gehäusering 5 mehrere derartige Bolzenschrauben 18 auf, die die Demontage der Flammensperranordnung erleichtern. Durch Einschrauben der Bolzenschraube 18 kann nämlich der Gehäusering 5 von der zylindrischen Mantelwandung 10 durch Schrauben abgezogen werden, wodurch der Zugang zu der Anordnung aus den Flammensperreinsätzen 6, den Zwischenlagen 7 und den Dichtungen 11 frei wird. Da der äußere radiale Spalt 12 zur zylindrischen Mantelwand vorgesehen ist, lassen sich die Flammensperreinsätze 6 mit den Zwischenlagen 7 und den Dichtungen 11 einzeln oder gemeinsam in einfacher Weise entnehmen und zu Servicezwecken reinigen oder ersetzen.

Die in den bisherigen Ausführungsbeispielen dargestellten Flammensperreinsätze 6 bestehen aus spiralförmigen oder konzentrischen, aneinander anliegenden Windungen, die jeweils aus einem glatten Metallband und einem gewellten Metallband bestehen. Das gewellte Metallband ist dabei vorzugsweise mit Wellungen ausgeführt, die schräg zur Längsrichtung des Bandes stehen. Die gegenläufigen Schraffierungen in den Zeichnungen bringen dabei zum Ausdruck, dass zur Vergleichmäßigung der Durchströmung der Flammensperreinsätze 6 mit unterschiedlichen Richtungen gewickelte Flammensperreinsätze aneinander anschließen, sodass das Gas durch das Paket der Flammensperreinsätze nach Art eines Zick-Zack-Kurses strömt, weil die durch das gewellte Band verursachten Durchtrittsspalte in unterschiedlichen Schrägrichtungen verlaufen.

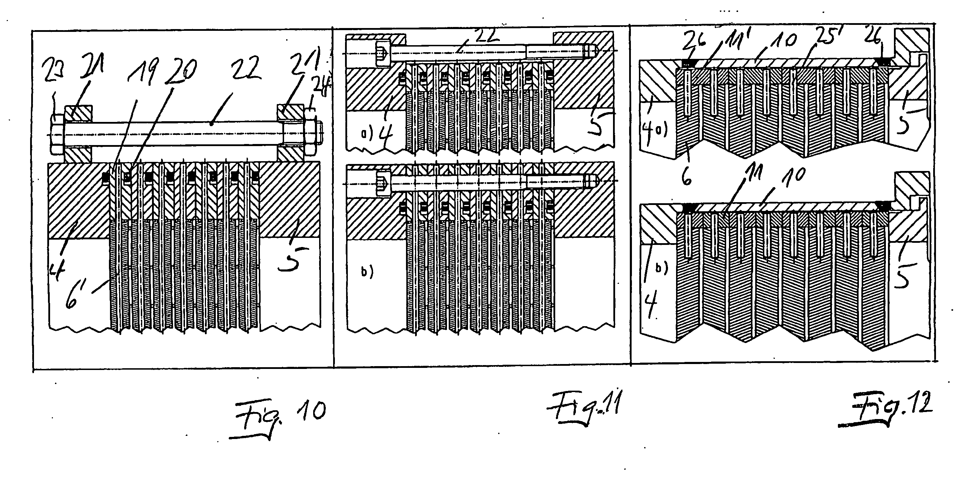

Bei dem in Figur 10 dargestellten Ausführungsbeispiel sind die Flammensperreinsätze 6' mit einem umlaufenden massiven Rand 19 versehen, der einseitig eine umlaufende offene Nut zur Aufnahme einer Dichtung 20 aufweist. In dieser Ausführungsform sind die Gehäusering 4, 5 mit Ansätzen 21 versehen, die Öffnungen zur Durchführung einer Spannschraube 22 aufweisen. Die Spannschraube 22 liegt an einem der Ansätze 21 mit einem Schraubenkopf 23 und an dem anderen der Ansätze 21 mit einer den Bolzen umgebenden Mutter 24 an, sodass mittels mehrer derartiger, über den Umfang verteilter Spannschrauben 22 die Gehäuseringe 4, 5 axial aufeinander zugezogen werden und den aus den Flammensperreinsätzen 6' gebildeten Stapel zwischen sich einspannen.

Jeder der Flammensperreinsätze 6' ist in der Ausführungsform gemäß Figur 10 mit einem radial durch ihnen hindurch gebohrten Bolzen stabilisiert. Eine derartige Stabilisierung von Flammensperreinsätzen 6' ist für große, gewickelte Flammensperreinsätze 6' grundsätzlich bekannt.

Figur 11 zeigt zwei Varianten für die Ausführung der Spannschraube 22 in Verbindung mit den Gehäuseringen 4, 5 um die axiale Verspannung durchzuführen.

In der Variante gemäß Figur 11b erstreckt sich die Spannschraube dabei durch Durchgangslöcher in den massiven Rändern 19 der Flammensperreinsätze 6', wodurch eine zusätzliche Ausrichtung der Flammensperreinsätze 6' gewährleistet wird.

In den Ausführungsformen der Figur 12 sind acht Flammensperreinsätze 6 vorgesehen, die zwischen Gehäuseringen 4, 5 angeordnet sind. In dieser Ausführungsform ist die zylindrische Mantelwandung 10 durch Schweißnähte 26 mit dem Gehäuse 1 verbunden.

Die Dichtungen 11' sind gemäß Figur 12a in einer axialen Länge ausgeführt, die der summierten axialen Länge zweier Flammensperreinsätze 6 und zweier Zwischenlagen 7 entspricht. Für die acht Flammensperreinsätze 6 mit den acht Zwischenlagen 7 sind somit vier geschlossene Dichtungen 11' eingesetzt, die zwischen dem Gehäuseringen 4, 5 eingespannt sind. Zur Verbindung der Dichtungen 11' mit den Flammensperreinsätzen 6 sind radiale Bolzenabschnitte 25' eingebracht, die vorzugsweise unter Erhalt der definierten Durchtrittsspalte der Flammensperreinsätze 6 durch Funkenerosion eingebracht werden. Im Unterschied zu den Bolzen 25 gemäß Figur 10 erstrecken sich die Bolzenabschnitte 25' nur über einen radialen Teilbereich, während die Bolzen 25 sich über den gesamten Durchmesser des Flammensperreinsatzes 6' erstrecken.

Figur 12b verdeutlicht, dass die Stabilisierung mit den Bolzenabschnitten 25' natürlich auch möglich ist, wenn die Dichtungen 11, wie in Figur 1, die axiale Länge nur eines Flammensperreinsatzes 6 mit der zugehörigen Zwischenlage 7 aufweisen.

Aus den Beschreibungen der Ausführungsbeispiele ist ohne weiteres ersichtlich, dass im Rahmen der beanspruchten Erfindung weitere verschiedene konstruktive Ausgestaltungen möglich sind. So können auch zylindrische Mantelwandungen 10 oder Gehäuseringe 4, 5 mit abgestuften Wandbereichen Verwendung finden, die eine gestufte Anordnung von Flammensperreinsätzen 6 unterschiedlicher Größe ermöglichen. Bevorzugt ist jedoch die Verwendung von Flammensperreinsätzen 6 gleicher Größe, um die Nachteile eines erhöhten Aufwandes für die Fertigung des Gehäuses und der Einspannung des Stapels der Flammensperreinsätze 6 zu vermeiden.

## Patentansprüche

1. Flammensperranordnung mit einem Gehäuse (1) zur Halterung von wenigstens zwei Flammensperreinsätzen (6, 6') mit einer Vielzahl von für ein brennbares Gas dimensionierten axialen Durchtrittsspalten und mit einer zwischen zwei Flammensperreinsätzen (6, 6') angeordneten Zwischenlage (7), die eine radiale Vertellung der aus einem Flammensperreinsatz (6, 6') austretenden und in einen stromabwärts benachbarten Flammensperreinsatz (6, 6') eintretenden Gasströmung erlaubt, **dadurch gekennzeichnet, dass** radial außen von den Flammensperrensätzen (6, 6') ein den Ausbau des Flammensperreinsatzes (6, 6') erleichternder Raum (12) vorgesehen ist und wenigstens eine separate geschlossene Dichtung (11, 11', 15, 17, 17', 20) zwischen einem Flammensperreinsatz (6, 6') und dem Gehäuse (1) oder zwischen zwei Flammensperrelnsätzen (6, 6') so angeordnet ist, dass eine Umströmung des Flommensperreinsatzes (6, 6') in dem radial außen von den Durchtrittsspalten befindlichen Raum (12) verhindert wird.

2. Flammensperranordnung nach Anspruch 1, **dadurch gekennzeichnet, dass** die Flammensperreinsätze (6, 6') scheibenförmig mit gleichen Querschnitten ausgebildet sind.

3. Flammensperranordnung nach Anspruch 1 oder 2, **dadurch gekennzeichnet, dass** das Gehäuse (1) wenigstens zwei axial gegeneinander verspannte Gehäuseteile (4, 5) aufweist, zwischen den sich die Flammensperreinsätze (6, 6') befinden.

4. Flammensperranordnung nach einem der Ansprüche 1 bis 3, **dadurch gekennzeichnet, dass** wenigstens drei Flammensperreinsätze (6,6') vorgesehen sind.

5. Flammensperranordnung nach einem der Ansprüche 1 bis 4, **dadurch gekennzeichnet, dass** die wenigstens eine geschlossene Dichtung (11, 11', 17, 17') radial außen von wenigstens einem Flammensperreinsatz (6) ausgebildet ist.

6. Flammensperranordnung nach Anspruch 5, **dadurch gekennzeichnet, dass** die separate geschlossene Dichtung (11, 11') durch spiralförmig aufeinander gewickelte Windungen aus einem glatten Metallband gebildet ist.

7. Flammensperranordnung nach Anspruch 5 oder 6, **dadurch gekennzeichnet, dass** jeder Flammensperreinsatz (6) eine radial außen positionierte geschlossene Dichtung (11, 11') aufweist.

8. Flammensperranordnung nach einem der Ansprüche 5 bis 7, **dadurch gekennzeichnet, dass** die Dichtungen (11, 11') eine axiale Länge aufweisen, die der axialen Länge des Flammensperreinsatzes (6, 6') zuzüglich der axialen Länge der Zwischenlage (7) entspricht.

9. Flammensperranordnung nach einem der Ansprüche 5 bis 7, **dadurch gekennzeichnet, dass** die Dichtungen (11) eine axiale Länge aufweisen, die der axialen Länge des Flammensperreinsatzes (6) entspricht und dass für die Zwischenlage (7) ein geschlossener Dichtungs-Zwischenring (13) in der Länge der axialen Länge der Zwischenlage (7) zwischen den Dichtungen (11) der Flammensperreinsätze (6) angeordnet ist.

10. Flammensperranordnung nach einem der Ansprüche 3 bis 6 und einem der Ansprüche 7 bis 9, **dadurch gekennzeichnet, dass** die geschlossenen Dichtungen (11, 11') zwischen den axial miteinander verspannten Gehäuseteilen (4, 5) angeordnet sind und den Spanndruck der Gehäuseteile (4, 5) aufnehmen.

11. Flammensperranordnung nach einem der Ansprüche 1 bis 10, **dadurch gekennzeichnet, dass** radial außen von den Flammensperreinsätzen (6, 6') ein die Montage und Demontage der Flammensperreinsätze (6, 6') erleichternder umlaufender Spalt (12) zu einer Mantelwandung (10) des Gehäuses (1) vorgesehen ist.

12. Flammensperranordnung nach Anspruch 11, **dadurch gekennzeichnet, dass** die wenigstens eine geschlossene Dichtung (17, 17') den radial äußeren Spalt (12) zwischen Flammensperreinsatz (6, 6') und dem Gehäuse (1) für einen axialen Durchgang verschließt.

13. Flammensperranordnung nach einem der Ansprüche 1 bis 4, **dadurch gekennzeichnet, dass** die wenigstens eine geschlossene Dichtung (15, 20) am radialen Rand zwischen zwei Flammensperreinsätzen (6, 6') angeordnet ist.

14. Flammensperranordnung nach Anspruch 13, **dadurch gekennzeichnet, dass** die Zwischenlage (7) um die radiale Stärke der geschlossenen Dichtung (15) kleiner ausgebildet ist.

15. Flammensperranordnung nach einem der Ansprüche 1 bis 14, **dadurch gekennzeichnet, dass** der Flammensperreinsatz (6') radial außen von den Durchtrittsspalten mit einem umlaufenden massiven Rand (19) versehen ist und dass die Ränder (19) als Stapel zwischen den axial gegeneinander verspannten Gehäuseteilen (4, 5) verspannt sind.

16. Flammensperranordnung nach Anspruch 15, **dadurch gekennzeichnet, dass** zwischen den Rändern (19) Ringdichtungen (20) eingelegt sind.

17. Flammensperranordnung nach einem der Ansprüche 1 bis 16, **dadurch gekennzeichnet, dass** die Flammensperreinsätze (6, 6') einen kreisrunden Querschnitt aufweisen.

18. Flammensperranordnung nach einem der Ansprüche 1 bis 17, **dadurch gekennzeichnet, dass** die Durchtrittsspalte der Flammensperreinsätze (6, 6') durch aneinander anliegende Windungen, die gemeinsam aus einem glatten Metallband und einem gewellten Metallband bestehen, gebildet sind.

## Claims

1. Flame arrester arrangement having a housing (1) for holding at least two flame arrester inserts (6, 6') having a large number of axial passage gaps dimensioned for a combustible gas, and having an intermediate layer (7) arranged between two flame arrester inserts (6, 6'), which permits a radial distribution of the gas flow emerging from one flame arrester insert (6, 6') and entering an adjacent downstream flame arrester insert (6, 6'), **characterized in that** a space (12) is provided radially outside the flame arrester inserts (6,6') which facilitates the disassembly of the flame arrester inserts (6, 6') and **in that** at least one separate closed seal (11, 11', 15, 17, 17', 20) is arranged between a flame arrester insert (6, 6') and the housing (1) or between two flame arrester inserts (6, 6') in such a way that a flow around the flame arrester insert (6, 6') in the space (12) located radially outside the passage gaps is prevented.

2. Flame arrester arrangement according to Claim 1, **characterized in that** the flame arrester inserts (6, 6') are of disc-like design with equal cross sections.

3. Flame arrester arrangement according to Claim 1 or 2, **characterized in that** the housing (1) has at least two housing parts (4, 5) which are clamped axially against one another and between which the flame arrester inserts (6, 6') are located.

4. Flame arrester arrangement according to one of Claims 1 to 3, **characterized in that** at least three flame arrester inserts (6, 6') are provided.

5. Flame arrester arrangement according to one of Claims 1 to 4, **characterized in that** the at least one closed seal (11, 11', 17, 17') is formed radially outside at least one flame arrester insert (6).

6. Flame arrester arrangement according to Claim 5, **characterized in that** the separate closed seal (11, 11') is formed by turns of a smooth metal strip wound spirally on one another.

7. Flame arrester arrangement according to Claim 5 or 6, **characterized in that** each flame arrester insert (6) has a closed seal (11, 11') positioned radially on the outside.

8. Flame arrester arrangement according to one of Claims 5 to 7, **characterized in that** the seals (11, 11') have an axial length which corresponds to the axial length of the flame arrester insert (6, 6') plus the axial length of the intermediate layer (7).

9. Flame arrester arrangement according to one of Claims 5 to 7, **characterized in that** the seals (11) have an axial length which corresponds to the axial length of the flame arrester insert (6), and **in that**, for the intermediate layer (7), a closed intermediate sealing ring (13) of the length of the axial length of the intermediate layer (7) is arranged between the seals (11) of the flame arrester inserts (6).

10. Flame arrester arrangement according to one of Claims 3 to 6 and one of Claims 7 to 9, **characterized in that** the closed seals (11, 11') are arranged between the housing parts (4, 5) clamped axially to one another and absorb the clamping pressure of the housing parts (4, 5).

11. Flame arrester arrangement according to one of Claims 1 to 10, **characterized in that** radially outside the flame arrester inserts (6, 6') there is provided a circumferential gap (12) in relation to a shell wall (10) of the housing (1), and this gap makes the assembly and disassembly of the flame arrester inserts (6, 6') easier.

12. Flame arrester arrangement according to Claim 11, **characterized in that** the at least one closed seal (17, 17') closes the radially outer gap (12) between the flame arrester insert (6, 6') and the housing (1) for an axial passage.

13. Flame arrester arrangement according to one of Claims 1 to 4, **characterized in that** the at least one closed seal (15, 20) is arranged at the radial edge between two flame arrester inserts (6, 6').

14. Flame arrester arrangement according to Claim 13, **characterized in that** the intermediate layer (7) is designed to be smaller by the radial thickness of the closed seal (15).

15. Flame arrester arrangement according to one of Claims 1 to 14, **characterized in that** the flame arrester insert (6') is provided radially outside the passage gaps with a circumferential solid edge (19), and **in that** the edges (19) are clamped as a stack between the housing parts (4, 5), which are clamped axially against one another.

16. Flame arrester arrangement according to Claim 15, **characterized in that** annular seals (20) are inserted between the edges (19).

17. Flame arrester arrangement according to one of Claims 1 to 16, **characterized in that** the flame arrester inserts (6, 6') have a circular cross section.

18. Flame arrester arrangement according to one of Claims 1 to 17, **characterized in that** the passage gaps of the flame arrester inserts (6, 6') are formed by turns resting on one another, which jointly comprise a smooth metal strip and a corrugated metal strip.

## Revendications

1. Agencement de protection antiflamme comprenant un boîtier (1) pour le maintien d'au moins deux inserts de protection antiflamme (6, 6') avec une pluralité de fentes traversantes axiales dimensionnées pour un gaz combustible, et comprenant une couche intermédiaire (7) agencée entre les deux inserts de protection antiflamme (6, 6'), laquelle permet une répartition radiale de l'écoulement de gaz sortant d'un insert de blocage antiflamme (6, 6') et entrant dans un insert de protection antiflamme (6, 6') voisin disposé en aval, **caractérisé en ce qu'**il est prévu, radialement à l'extérieur des inserts de blocage antiflamme (6, 6'), une chambre (12) qui facilite le démontage de l'insert de blocage antiflamme (6, 6'), et au moins un joint fermé séparé (11, 11', 15, 17, 17', 20) est agencé entre un insert de blocage antiflamme (6, 6') et le boîtier (1) ou entre deux inserts de protection antiflamme (6, 6') de telle façon qu'un écoulement contournant l'insert de protection antiflamme (6, 6') dans la chambre (12) qui se trouve radialement à l'extérieur des fentes traversantes est empêché.

2. Agencement de protection antiflamme selon la revendication 1, **caractérisé en ce que** les inserts de protection antiflamme (6, 6') sont réalisés en forme de plaques avec les mêmes sections transversales.

3. Agencement de protection antiflamme selon la revendication 1 ou 2, **caractérisé en ce que** le boîtier (1) comprend au moins deux parties de boîtier (4, 5) serrées axialement l'une contre l'autre, entre lesquelles se trouvent les inserts de protection antiflamme (6, 6').

4. Agencement de protection antiflamme selon l'une des revendications 1 à 3, **caractérisé en ce qu'**il est prévu au moins trois inserts de protection antiflamme (6, 6').

5. Agencement de protection antiflamme selon l'une des revendications 1 à 4, **caractérisé en ce que** ledit au moins un joint fermé (11, 11', 17, 17') est réalisé radialement à l'extérieur d'au moins un insert de protection antiflamme (6).

6. Agencement de protection antiflamme selon la revendication 5, **caractérisé en ce que** le joint fermé séparé (11, 11') est formé par des enroulements d'une bande de métal lisse bobinés en spirale les uns sur les autres.

7. Agencement de protection antiflamme selon la revendication 5 ou 6, **caractérisé en ce que** chaque insert de protection antiflamme (6) comprend un joint fermé (11, 11') positionné radialement à l'extérieur.

8. Agencement de protection antiflamme selon l'une des revendications 5 à 7, **caractérisé en ce que** les joints (11, 11') présentent une longueur axiale qui correspond à la longueur axiale de l'insert de protection antiflamme (6, 6') plus la longueur axiale de la couche intermédiaire (7).

9. Agencement de protection antiflamme selon l'une des revendications 5 à 7, **caractérisé en ce que** les joints (11) présentent une longueur axiale qui correspond à la longueur axiale de l'insert de protection antiflamme (6), et **en ce que** pour la couche intermédiaire (7), une bague intermédiaire de joint fermé (13) avec pour longueur la longueur axiale de la couche intermédiaire (7) est agencée entre les joints (11) des inserts de protection antiflamme (6).

10. Agencement de protection antiflamme selon l'une des revendications 3 à 6 et l'une des revendications 7 à 9, **caractérisé en ce que** les joints fermés (11, 11') sont agencés entre les parties de boîtier (4, 5) serrées axialement l'une contre l'autre et encaissent la pression de serrage des parties de boîtier (4, 5).

11. Agencement de protection antiflamme selon l'une des revendications 1 à 10, **caractérisé en ce qu'**il est prévu radialement à l'extérieur des inserts de protection antiflamme (6, 6') une fente périphérique (12) facilitant le montage et le démontage des inserts de protection antiflamme (6, 6'), vers une paroi enveloppe (10) du boîtier (1).

12. Agencement de protection antiflamme selon la revendication 11, **caractérisé en ce que** ledit au moins un joint fermé (17, 17') referme la fente radialement extérieure (12) entre l'insert de blocage antiflamme (6, 6') et le boîtier pour une traversée axiale.

13. Agencement de protection antiflamme selon l'une des revendications 1 à 4, **caractérisé en ce que** ledit au moins un joint fermé (15, 20) est agencé à la bordure radiale entre deux inserts de protection antiflamme (6, 6').

14. Agencement de protection antiflamme selon la revendication 13, **caractérisé en ce que** la couche intermédiaire (7) est réalisée plus petite, à raison de l'épaisseur radiale du joint fermé (15).

15. Agencement de protection antiflamme selon l'une des revendications 1 à 14, **caractérisé en ce que** l'insert de protection antiflamme (6') est doté, radialement à l'extérieur des fentes traversantes, d'une bordure massive périphérique (19), et **en ce que** les bordures (19) sont enserrées, sous forme d'empilements, entre les parties de boîtier (4, 5) serrées axialement l'une contre l'autre.

16. Agencement de protection antiflamme selon la revendication 15, **caractérisé en ce que** des joints annulaires (20) sont mis en place entre les bordures (19).

17. Agencement de protection antiflamme selon l'une des revendications 1 à 16, **caractérisé en ce que** les inserts de protection antiflamme (6, 6') ont une section transversale circulaire.

18. Agencement de protection antiflamme selon l'une des revendications 1 à 17, **caractérisé en ce que** les fentes traversantes des inserts de protection antiflamme (6, 6') sont formées par des enroulements appliqués les uns contre les autres, qui sont conjointement constitués d'une bande de métal lisse et d'une bande de métal ondulée.
